Europäisches Patentamt

European Patent Office

Office européen des brevets

(11) Veröffentlichungsnummer: **0 385 968 A2**

## (12) EUROPÄISCHE PATENTANMELDUNG

(21) Anmeldenummer: 90890049.1

(22) Anmeldetag: 26.02.90

(51) Int. Cl.5: **C22B 3/26**

(30) Priorität: 24.02.89 AT 416/89

(43) Veröffentlichungstag der Anmeldung:
05.09.90 Patentblatt 90/36

(84) Benannte Vertragsstaaten:
AT BE CH DE DK ES FR GB GR IT LI LU NL SE

(71) Anmelder: **PRIOR ENGINEERING AG**
**Steinwiesstrasse 24**
**Ch-8032 Zürich(CH)**

(72) Erfinder: **Prior, Adalbert, Dr.**
**Neuburgstrasse 8**
**A-6840 Götzis(AT)**

(74) Vertreter: **Collin, Hans, Dipl.-Ing. Dr. et al**
**Patentanwälte Dipl.-Ing. Dr. Hans Collin**
**Dipl.-Ing. Erwin Buresch Dipl.-Ing.Armin**
**Häupl Mariahilferstrasse 50**
**A-1070 Wien(AT)**

(54) Verfahren zum Abtrennen und Rückgewinnen von gelösten, fällbaren Metallen, insbesondere Schwermetallen, aus wässerigen Lösungen.

(57) Vorgeschlagen wird ein Verfahren zum Abtrennen und Rückgewinnen von gelösten, fällbaren Metallen, insbesondere Schwermetallen, aus wässerigen Lösungen, insbesondere Abwässern, bei dem die Lösungen zur Bildung von Fällungsprodukten dieser Metalle in ihrem pH-Wert und/oder in ihrem Redox-Potential verändert werden, die Fällungsprodukte konzentriert und als wässerige Suspension abgetrennt werden und die Suspension einer bekannten selektiven Flüssig/Flüssigextraktion mit Ionentauschern und/oder Chelatbildnern zugeführt wird, und die beladenen Ionentauscher und\oder Chelatbildner anschließend gestrippt werden. Weiterhin vorgeschlagen wird eine Vorrichtung zur Durchführung dieses Verfahrens in Form einer Mischer/Abscheidereinheit, deren Mischer eine Mischpumpe ist und vor deren Abscheider vorzugsweise eine Koaleszierstufe angeordnet ist, mit dem besonderen Merkmal, daß anschließend an die Mischpumpe eine statische Verweilzone, vorteilhaft ein Behälter mit oberflächenvergrößernden Einbauten, insbesondere ein horizontales Rohr, in das ein spiralig gewickeltes Kunststoffnetz eingebracht ist, vorgesehen ist.

# Verfahren zum Abtrennen und Rückgewinnen von gelösten, fällbaren Metallen, insbesondere Schwermetallen, aus wässerigen Lösungen

Die Erfindung betrifft ein Verfahren zum Abtrennen und Rückgewinnen von gelösten, fällbaren Metallen, insbesondere Schwermetallen, aus wässerigen Lösungen, insbesondere Abwässern.

Wie bekannt, können die gelösten Metalle z.B. als einfache Ionen, komplexe Ionen oder Chelate in den Lösungen vorliegen.

Die Aufarbeitung derartiger Lösungen ist dann schwierig, wenn die Konzentration der Metalle in diesen Lösungen so gering ist, daß eine z.B. aus der DE-OS 3 318 109 bekannte, direkte selektive Abtrennung der Metalle über eine Flüssig/ Flüssigextraktion mit organischen Ionentauschern an den großen Volumina scheitert. Dieses Problem wird gemäß der vorliegenden Erfindung dadurch gelöst, daß die abzutrennenden Metalle vor der Extraktion durch Fällen konzentriert werden.

Demgemäß ist das erfindungsgemäße Verfahren vor allem dadurch gekennzeichnet, daß die Lösungen zur Bildung von Fällungsprodukten dieser Metalle in ihrem pH-Wert und/oder in ihrem Redox-Potential verändert werden, die Fällungsprodukte konzentriert und als wässerige Suspension abgetrennt werden und die Suspension einer bekannten selektiven Flüssig/Flüssigextraktion mit Ionentauschern und/oder Chelatbildnern zugeführt wird, und daß die beladenen Ionentauscher und/oder Chelatbildner anschließend gestrippt werden.

Die Fällungsprodukte werden dabei in bekannter Weise konzentriert, z.B. über Schrägklärer oder andere Schlammabtrennvorrichtungen, und der dabei erhaltene Dünnschlamm direkt der Flüssig/Flüssigextraktion zugeführt, in der die für die Extraktion benötigten Parameter, insbesondere der geeignete pH-Wert oder pH-Wertbereich, eingestellt werden.

Beispielsweise werden die Lösungen zuerst alkalisch gestellt, bevorzugt auf einen pH-Wert zwischen 8 und 12, und anschließend geklärt, wobei Hydroxidschlämme abgetrennt werden, die dann direkt der Extraktion zugeführt werden.

Die Extraktion wird vorteilhaft in einer bekannten Extraktionsstufe vom Mischer/Abscheidertyp durchgeführt, deren Mischvorrichtung eine Mischpumpe ist. Derartige Anlagen sind z.B. in der DE-OS 1 442 444 und der DE-AS 2 134 020 beschrieben.

Es wurde gefunden, daß sich mit diesen Mischpumpen die anfallenden Feststoffsuspensionen und das Extraktionsmittel mit hohem Wirkungsgrad mischen lassen.

Der Mischpumpe wird vorteilhaft erfindungsgemäß eine statische Verweilzone nachgeschaltet, in der die Extraktion ablaufen gelassen wird. Diese Verweilzone ist vorteilhaft ein Gefäß mit oberflächenvergrößernden Einbauten, z.B. eine horizontale Füllkörperkolonne. Vor dem Abscheidergefäß ist weiterhin vorteilhaft ein bekannter Koaleszierer angeordnet, um die Phasentrennung Extrakt/Raffinat zu begünstigen; er besteht z.B. ebenfalls aus einer Füllkörperkolonne oder aus einem mit einer Glasfibermatte gefüllten Gefäß.

Es hat sich überraschenderweise herausgestellt, daß die Fällungsprodukte nicht vor dem Einbringen in die Extraktionsstufe wieder gelöst werden müssen; es genügt, wenn die Extraktion selbst beim gewünschten spezifischen pH-Wert bzw. pH-Wertbereich durchgeführt wird.

Als Extraktionsmittel sind alle flüssigen Ionentauscher, deren Extraktionsverhalten und Selektivität sich durch Einstellung eines bestimmten pH-Wertes und/oder Redoxpotentials steuern läßt, geeignet. Ebenso geeignet sind Extraktionsmittel, die auf chelatbildender Basis arbeiten.

Das erfindungsgemäße Verfahren eignet sich für alle Fällungsprodukte, die z.B. durch Zugabe von Säure, Lauge oder Redoxchemikalien so aufbereitet werden können, daß bestimmte Ionen, wie z.B. Metallionen, aber auch chemische Komplexe von einem selektiven Extraktionsmittel aufgenommen und extrahiert werden können.

Insbesondere werden organische Ionentauscher eingesetzt, deren Selektivität und/oder Austauschcharakteristik eine Funktion des pH-Wertes und/oder Redoxpotentials ist und die beladenen Ionentauscher mit Säuren gestrippt.

Man kann davon ausgehen, daß die abgetrennte Suspension der Fällungsprodukte (Dünnschlamm) nur etwa 1 bis 15 % des Volumens der Ausgangslösung ausmacht. Dadurch wird die Anwendung einer Flüssig/Flüssigextraktion erst sinnvoll, wobei natürlich dadurch auch die Extraktionsmittelverluste gering sind.

Mit dem erfindungsgemäßen Verfahren lassen sich nicht nur große Lösungsvolumina wirksam und elegant reinigen, es werden dabei auch selektiv konzentrierte Metallsalzlösungen mit Handelsqualität gewonnen.

Das erfindungsgemäße Verfahren wird nachfolgend an Hand eines Beispiels näher erläutert:

Beispiel:

2000 l einer wässerigen Lösung mit einem Gehalt von 850 ppm Zn werden mit NaOH auf pH 9 eingestellt und in einem Klärbehälter die Schlammphase abgetrennt; dabei werden etwa 100 l Dünnschlammphase abgezogen und in einer Extraktionsanlage, bestehend aus einer Mischpumpe, die gleichzeitig die organische Phase (Extraktionsmittel) und die wässerige Phase in einem wählbaren Mischungsverhältnis ansaugt, mischt und weiterfördert; einem Statikmischer, einem anschließenden Koaleszierer und einem Settlerbehälter, mit einer 20 %igen Lösung von Di-2-äthyl-hexylphosphat (Hostarex PA 216) in Kerosin extrahiert. Di-2-äthyl-hexylphosphat ist aus der DE-OS 2 601 471 als Zn-spezifisches Extraktionsmittel bekannt. Der Statikmischer bestand aus einem horizontalen Rohr, in das ein spiralig gewickeltes Kunststoffnetz eingesetzt war. Als Koaleszierer diente ein mit einer Glasfibermatte gefülltes Gefäß.

In der abdekantierten wässerigen Phase betrug der Zn-Gehalt 0,6 mg/l. Unmittelbar vor der Mischpumpe wurde dem Zn-haltigen Dünnschlamm Säure zudosiert. Mittels einer elektronischen Regelung wurde der pH-Wert auf 5 eingestellt. Der Zn-Gehalt der wässerigen Phase lag bei 3,2 ppm. Die mit Zn beladene organische Phase wurde mit 20 % $H_2SO_4$ gestrippt und etwa 50 l einer Zn-Sulfatlösung mit einem Gehalt von 33,58 g/l Zn erhalten.

## Ansprüche

1. Verfahren zum Abtrennen und Rückgewinnen von gelösten, fällbaren Metallen, insbesondere Schwermetallen, aus wässerigen Lösungen, insbesondere Abwässern, dadurch gekennzeichnet, daß die Lösungen zur Bildung von Fällungsprodukten dieser Metalle in ihrem pH-Wert und/oder in ihrem Redox-Potential verändert werden, die Fällungsprodukte konzentriert und als wässerige Suspension abgetrennt werden und die Suspension einer bekannten selektiven Flüssig/Flüssigextraktion mit Ionentauschern und/oder Chelatbildnern zugeführt wird, und daß die beladenen Ionentauscher und/oder Chelatbildner anschließend gestrippt werden.

2. Verfahren nach Anspruch 1, dadurch gekennzeichnet, daß organische Ionentauscher und/oder Chelatbildner eingesetzt werden, deren Selektivität und/oder Austauschcharakteristik eine Funktion des pH-Werts und/oder Redoxpotentials ist.

3. Verfahren nach Anspruch 1 oder 2, dadurch gekennzeichnet, daß die beladenen Ionentauscher und/oder Chelatbildner mit Säuren gestrippt werden.

4. Vorrichtung zur Durchführung des Verfahrens nach einem der Ansprüche 1 bis 3, in Form einer Mischer/Abscheidereinheit, deren Mischer eine Mischpumpe ist und vor deren Abscheider vorzugsweise eine Koaleszierstufe angeordnet ist, dadurch gekennzeichnet, daß anschließend an die Mischpumpe eine statische Verweilzone, vorteilhaft ein Behälter mit oberflächenvergrößernden Einbauten, insbesondere ein horizontales Rohr, in das ein spiralig gewickeltes Kunststoffnetz eingebracht ist, vorgesehen ist.